## Europäisches Patentamt

## European Patent Office

## Office européen des brevets

(19)

(11) Veröffentlichungsnummer: **0 004 008**
**B1**

(12) ## EUROPÄISCHE PATENTSCHRIFT

(45) Veröffentlichungstag der Patentschrift:
25.11.81

(51) Int. Cl.³: **H 04 L 25/49**

(21) Anmeldenummer: 79100556.4

(22) Anmeldetag: 23.02.79

(54) Schneller Amplitudenentscheider für digitale Signale.

(30) Priorität: 24.02.78 DE 2808008

(43) Veröffentlichungstag der Anmeldung:
19.09.79 Patentblatt 79/19

(45) Bekanntmachung des Hinweises auf die Patenterteilung:
25.11.81 Patentblatt 81/47

(84) Benannte Vertragsstaaten:
BE CH FR GB IT LU NL SE

(56) Entgegenhaltungen:
DE-A-2 623 444
US-A-3 267 459
US-A-3 401 342
B. C. ROGERS: »Delay-Trims«, een nieuw
onderdeel voor elektronische schakelingen,
Seiten 232—235
ELECTRONIC ENGINEERING, Vol. 42,
Nr. 511, September 1970,
London, GB,
H. A. COLE: »Pulse discriminator takes
advantage of backlash« Seiten 81—83
1976 INTERNATIONAL ZURICH SEMINAR ON
DIGITAL COMMUNICATIONS; Zürich, 9—11 März
1976, IEEE,
New York, USA,

(73) Patentinhaber: SIEMENS AKTIENGESELLSCHAFT Berlin
und München, Postfach 22 02 61, D-8000 München 22 (DE)

(72) Erfinder: Meyer, Fritz, Dr.-Ing., Sudetenstrasse 9,
D-8032 Gräfelfing (DE)

B. ABRAHAMSEN et al:
»A 560 Mbit/s digital transmission system
over coaxial cable«,
Seiten A4.1—A4.6
THE BELL SYSTEM TECHNICAL JOURNAL;
Vol. 50, Nr. 2, Februar 1971,
New York, USA,
C. W. BRODERICK: »A digital transmission
system for TD-2 radio«,
Seiten 481—499

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Schneller Amplitudenentscheider für digitale Signale

Die Erfindung betrifft einen Amplitudenentscheider für digitale Signale mit n Amplitudenstufen mit wenigstens einem Schmitt-Trigger.

Durch Verwendung von digitalen Signalen mit mehreren Amplitudenstufen ist eine Erhöhung der Übertragungskapazität breitbandiger Übertragungssysteme für digitale Signale möglich. Bei der Regenerierung von Signalen mit mehreren Amplitudenstufen ergeben sich dabei hinsichtlich der Amplitudenregenerierung erhebliche Probleme, die insbesondere in der hohen Schrittgeschwindigkeit begründet liegen. Für die Übertragung digitaler Signale mit hohen Schrittgeschwindigkeiten wurden deshalb Möglichkeiten untersucht, schnelle Amplitudenscheider mittels Tunneldioden zu realisieren. Neben dem hohen Aufwand, den das Rücksetzen der bistabilen Tunneldiodenschaltungen erfordert, ergeben sich weitere Schwierigkeiten durch die großen Streubereiche der Tunneldiodenparameter.

Es ist bereits bekannt, Vergleiche US-A-3 688 128, Amplitudenentscheider mittels sogenannter Schmitt-Trigger zu realisieren. Schmitt-Trigger weisen bekanntlich neben einer oberen Einschaltschwelle eine untere Ausschaltschwelle auf. Für die Amplitudenentscheidung binärer Signale ist es deshalb notwendig, beispielsweise bei Verwendung der oberen Einschaltschwelle des Schmitt-Triggers als Amplitudenentscheidungsschwelle, nach jedem entschiedenen Impuls, nachdem also der Schmitt-Trigger eingeschaltet ist, durch einen zusätzlichen Schaltimpuls den Schmitt-Trigger unter die Ausschaltschwelle zu bringen und dadurch den definierten Anfangszustand wieder herzustellen. Dadurch ergibt sich ein zusätzlicher Aufwand für die Erzeugung der Ausschalt- bzw. Rücksetzimpulse, außerdem muß die mögliche Arbeitsgeschwindigkeit der Schmitt-Trigger relativ hoch liegen, da die Rücksetzimpulse die Nutzimpulse nicht überdecken dürfen und deshalb ein zeitlicher Sicherheitsabstand benötigt wird.

Die Aufgabe der Erfindung liegt also darin, einen schnellen Amplitudenentscheider für binäre und mehrstufige Signale anzugeben, der ohne Tunneldioden auskommt und gegenüber den bekannten Amplitudenentscheidern mit Schmitt-Triggern einen geringen Aufwand und eine höhere Verarbeitungsgeschwindigkeit besitzt.

Erfindungsgemäß wird die Aufgabe dadurch gelöst, daß n − 1 mit dem Signaleingang verbundene Signalwandler mit n ≧ 2 vorgesehen sind, die jeweils auf eine der zwischen den n Amplitudenstufen liegenden n − 1 Entscheiderschwellen abgestimmt sind und daß die Signalwandler n − 1 parallele binäre Signale erzeugen, daß jeweils eine angepaßte, am Ende kurzgeschlossene Leitung, deren Länge jeweils eine Impulslaufzeit gleich der halben Schrittperiodendauer ergibt, an jeden Signalausgang der Signalwandler angeschlossen ist, daß die Leitungen n − 1 parallele pseudoternäre Signale erzeugen und daß n − 1 gleiche, an die Signalausgänge der Signalwandler angeschlossene Schmitt-Trigger vorgesehen sind, die in bekannter Weise aus zugeführten pseudoternären Signalen amplitudenentschiedene binäre Signale erzeugen, die entweder direkt oder nach einer Zeitentscheidung zu einem neuen Mehrstufensignal kombiniert werden können.

Die Erfindung beruht dabei auf der Erkenntnis, daß durch die Verwendung geeignet bemessener Stichleitungen aus jedem Nutzimpuls in einfacher Weise zu einem definierten Zeitpunkt der Rücksetzspule für den Schmitt-Trigger erzeugt werden kann und dabei zusätzliche zeitliche Sicherheitsabstände nicht benötigt werden.

Eine wegen des geringen notwendigen Aufwandes bevorzugte Ausführungsform des Amplitudenentscheiders nach der Erfindung ergibt sich dadurch, daß die Signalwandler jeweils aus einem Differenzverstärker in ECL-Schaltung mit jeweils einem Eingangs- und einem Ausgangstransistor gebildet sind, daß der Basisanschluß des Eingangstransistors mit dem Signaleingang des Signalwandlers und der Basisanschluß des Ausgangstransistors mit einem, der betrachteten Schwelle entsprechenden Vergleichspotential verbunden ist und daß der Kollektoranschluß des Ausgangstransistors über einen Widerstand mit dem einen Anschluß der am Ende kurzgeschlossenen Leitung und mit dem Eingang des Schmitt-Triggers verbunden ist.

Für die Verarbeitung stark jitterbehafteter Eingangsimpulse ist eine Variante der Erfindung zweckmäßig, bei der die Signalwandler jeweils aus zwei in Reihe geschalteten Differenzverstärkern von ECL-Typ mit jeweils einem Eingangs- und einem Ausgangstransistor gebildet sind und daß der Basisanschluß des Eingangstransistors des ersten Differenzverstärkers mit dem Signaleingang, der Basisanschluß des Ausgangstransistors des ersten Differenzverstärkers mit einem ersten Vergleichspotential, der Kollektoranschluß dieses Transistors wahlweise über einen Kondensator oder aber direkt mit dem Mittelpunkt eines Basisspannungsteilers und mit dem Basisanschluß des Eingangstransistors des zweiten Differenzverstärkers verbunden ist, daß der Basisanschluß des Ausgangstransistors des zweiten Differenzverstärkers mit einem zweiten Vergleichspotential und der Kollektoranschluß dieses Transistors über einen Widerstand mit dem einen Anschluß der am Ende kurzgeschlossenen Leitung und zusätzlich über einen Kondensator mit dem Eingang des Schmitt-Triggers verbunden ist.

Die Erfindung soll im folgenden anhand der Zeichnungen näher erläutert werden. Es zeigt

Fig. 1 die Amplitudenbereiche und die Schwellenspannungen eines vierstufigen digitalen Signals,

Fig. 2 einen Teil eines erfindungsgemäßen Amplitudenentscheiders,

Fig. 3 die Zerlegung eines vierstufigen digitalen Signals in drei Parallelsignale,

Fig. 4 die Umformung eines Parallelsignals vor der Amplitudenentscheidung und

Fig. 5 einen zweistufigen Signalwandler als Teil eines erfindungsgemäßen Amplitudenentscheiders.

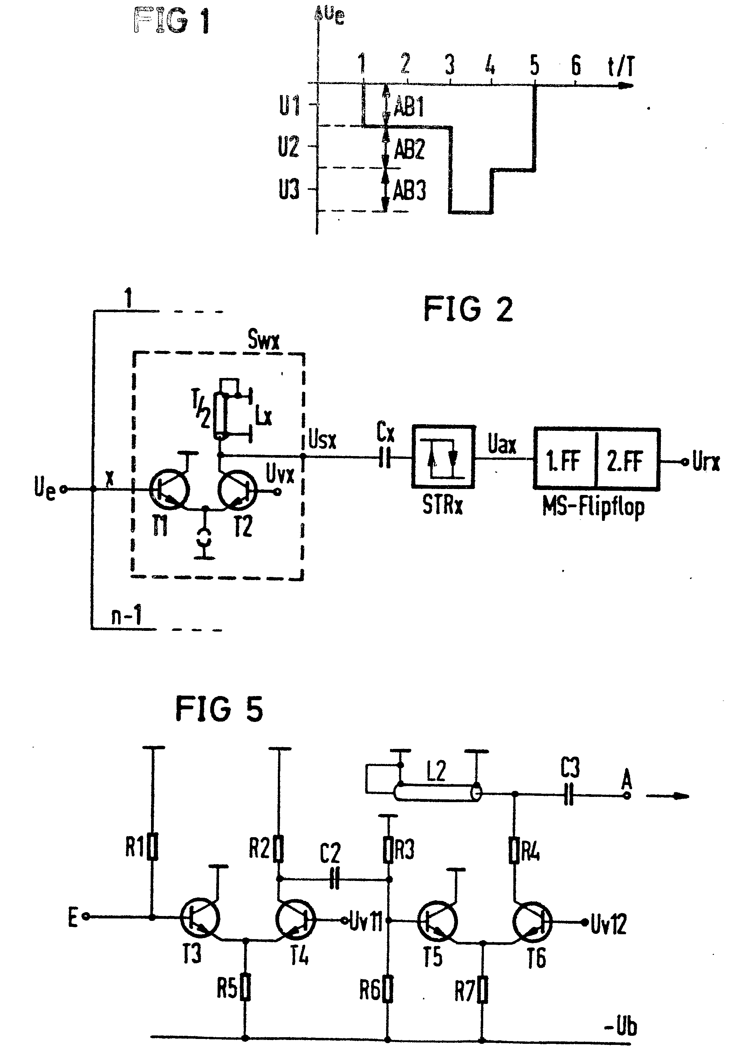

In der Fig. 1 ist als Beispiel eines mehrstufigen digitalen Signals ein ideales vierstufiges Signal mit der Schrittperiode T dargestellt. Das Signal enthält die Amplitudenbereiche Ab1, AB2 und Ab3. Jeweils in der Mitte der Amplitudenbereiche liegen die Schwellenspannungen U1, U2 und U3. Das Über- oder Unterschreiten dieser Schwellenspannungen soll durch drei parallele binäre Ausgangssignale Ua1 bis Ua3 angezeigt werden, wobei der Schwellenspannung U1 das Ausgangssignal Ua1 und entsprechend zugeordnet ist. Die Ausgangssignale Ua1 bis Ua3 sind dabei mit Hilfe eines Amplitudenentscheiders zu erzeugen.

In der Fig. 2 ist der Zweig x eines mehrstufigen Entscheiders dargestellt, dem als Eingangsspannung Ue beispielsweise das in der Fig. 1 dargestellte Signal zuzuführen ist. Zu diesem Zweck wird das beispielsweise vierstufige digitale Signal n − 1, also drei gleichen parallelen Zweigen zugeführt, die sich nicht in ihrem Aufbau, aber in der ihnen zugeführten Vergleichsspannung Uvx unterscheiden. Jeder Zweig enthält einen Signalwandler Sw, an den über einen Kondensator der eigentliche Amplitudenentscheider in Form eines Schmitt-Triggers STR und im vorliegenden Ausführungsfall ein MS-Flipflop (Master-Slave-Flipflop) zur Zeitentscheidung angeschlossen ist. Der dargestellte Zweig x enthält also den Signalwandler Swx, der aus einem ECL-Differenzverstärker mit angeschlossener Stichleitung besteht. Der Basisanschluß des Eingangstransistors T1 des Differenzverstärkers ist mit dem Signaleingang verbunden und gibt die aufgenommenen Signale über die Emitterkopplung an den Ausgangstransistor T2 ab, dessen Basisanschluß mit einer Quelle für eine Vergleichsspannung Uvx verbunden ist. Die einzelnen Vergleichsspannungen Uv entsprechen dabei den Schwellenspannungen U1, U2, U3 der Fig. 1. Ist die Vergleichsspannung Uvx beispielsweise entsprechend U2 der Fig. 1 gewählt, dann gibt der Transistor T2 beim dritten Taktschritt einen Ausgangsimpuls an seinem Kollektoranschluß an die angeschlossene Leitung Lx und über den Kondensator Cx an den Schmitt-Trigger STRx ab. Die Leitung Lx ist im Wellenwiderstand an die vorliegenden Impedanzverhältnisse angepaßt, außerdem ist sie am Ende kurzgeschlossen und in ihrer Länge so gewählt, daß die Impulslaufzeit bis zum Ende der halben Schrittperiodendauer entspricht. Dadurch erscheint nach Abklingen des vom Transistors T2 erzeugten Impulses am Eingang der Leitung ein von deren Ende reflektierter Impuls, der dem ursprünglichen Impuls in der Amplitude entspricht, jedoch inverse Polarität aufweist. Dieser Impuls wird ebenso wie der ursprüngliche Impuls über den Kondensator Cx zum Schmitt-Trigger STRx übertragen.

Unter der Voraussetzung, daß sich der Schmitt-Trigger STRx beim ersten Impuls in seinem Ausgangszustand befand und die Amplitude des ersten Impulses ausreichte, den Schmitt-Trigger über seine obere Schaltschwelle einzuschalten, dann wird nach der Schrittperiodendauer T durch den reflektierten Impuls mit umgekehrter Polarität der Schmitt-Trigger über seine untere Schaltschwelle wieder ausgeschaltet und befindet sich wieder in seiner Ausgangslage. Außerdem ist beim Ausschalten der am Ausgang des Schmitt-Triggers auftretende Impuls Uax beendet, bei dem es sich um einen rein binären Impuls handelt. Dieser Impuls entspricht also dem binären Teilsignal, das ein Überschreiten der Schwelle U2 im Vierstufensignal nach der Fig. 1 anzeigt. Die vom Schmitt-Trigger erzeugten Impulse werden im Ausführungsbeispiel einem Master-Slave-Flipflop zugeführt und in diesem zeitmäßig regeneriert. Am Ausgang des Flipflops stehen regenerierte Impulse Urx zur weiteren Verarbeitung bzw. zur Kombination zu einem neuen Vierstufensignal zur Verfügung.

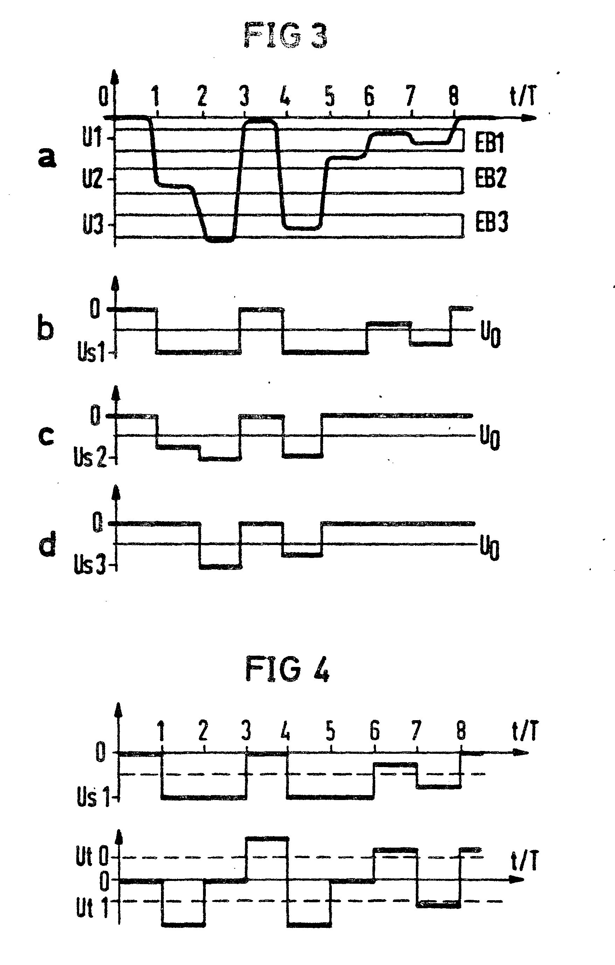

In der Fig. 3 ist die Zerlegung eines vierstufigen digitalen Signals nochmals dargestellt. Um die Schwellenspannungen U1, U2, U3 sind die Entscheiderbereiche EB1, 2, 3 angedeutet; die Lage der einzelnen Entscheiderbereiche EB1, 2, 3 wird dabei durch die Wahl der Vergleichsspannung Uv am Basisanschluß des Transistors T2 des Signalwandlers festgelegt. Durch den Differenzverstärker im Signalwandler erfolgt also eine begrenzende Verstärkung der Signalanteile in einem bestimmten Amplitudenbereich. Durch den Signalwandler erfolgt somit eine erste Amplitudenentscheidung, dabei kann durch genügend klein gewählte Entscheiderbereiche, also entsprechend hohe Verstärkung des Differenzverstärkers, die Genauigkeit bei der Amplitudenentscheidung entsprechend erhöht werden. Außerhalb der Entscheiderbereiche liegende Signalteile werden begrenzt. Es ist ersichtlich, daß die im Figurenteil 3b gezeigte Kurve das Über- bzw. Unterschreiten der Umschaltschwelle U1 und in entsprechender Weise die in c und d dargestellten Kurven das Über- bzw. Unterschreiten der Umschaltschwellen U2 und U3 darstellen.

In der Fig. 4 ist der in der Fig. 3b dargestellte Verlauf des ersten binären Teilsignals erneut wiedergegeben, allerdings in seiner Amplitude so verschoben, daß es sich nunmehr um ein unipolares binäres Signal handelt. Darunter ist das Ausgangssignal des Signalwandlers dargestellt, das sich aus der Kombination des binären Teilsignals und des von der Stichleitung erzeugten reflektierten inversen Signals ergibt. Es zeigt sich, daß in allen Fällen, in denen das Eingangssignal des Signalwandlers eine Schwellenspannung überschreitet, sonst aber außerhalb des zugehörigen Entscheiderbereichs verläuft, für den zugehörigen Schmitt-Trigger ein Impuls konstanter Dauer und Amplitude erzeugt wird. Verläuft das Eingangssignal nach dem Überschreiten einer Schwellenspannung weiter innerhalb des zugehörigen Entscheiderbereichs, dann wird die Amplitudeninformation des Eingangssignals praktisch linear auf die Amplitude der erzeugten Impulse übertragen, sofern bandbegrenzte Signale vorliegen.

Die Amplitudenentscheidung über Schmitt-Trigger erfolgt mit Hilfe der zwei symmetrisch zum Massenpotential liegenden Schwellenspannungen $U_{t0}$ und $U_{t1}$. Die Grenze der Schmitt-Trigger-Empfindlichkeit wird dabei erreicht, wenn sich die Amplitude der erzeugten Impulse auf die Hälfte verringert hat. Die kleinste vertikale Augenöffnung der möglichen Signalverläufe am Entscheider, die noch zu einer korrekten Amplitudenentscheidung führt, entspricht daher der halben Breite der Entscheiderbereiche.

Für den Fall stark jitterbehafteter Signale und hoher Anforderungen an die Entscheiderqualität wird zweckmäßigerweise der in der Fig. 5 dargestellte zweistufige Signalwandler verwendet. Der dargestellte Signalwandler besteht aus zwei Differenzverstärkern in Emitterkopplung, die durch die Transistoren T3, T4 und T5, T6 gebildet werden. Im ersten, durch die Transistoren T3 und T4 gebildeten Differenzverstärker erfolgt ein erster Amplitudenvergleich mit der dem Ausgangstransistor T4 des ersten Differenzverstärkers zugeführten Vergleichsspannung $U_{v11} = -0{,}75$ V. Die vom Transistor T4 erzeugten Impulse werden über den Kondensator C2 dem zweiten, aus den Transistoren T5 und T6 gebildeten Differenzverstärker zugeführt, bei dem die Basis des Transistors T6 an die Vergleichsspannung $U_{v12} = -0{,}75$ V angeschlossen ist. Die vom Transistor T6 erzeugten Impulse werden in gleicher Weise wie bei dem Signalwandler nach der Fig. 2 dem Eingang einer am Ende kurzgeschlossenen angepaßten Leitung L2 und über den Kondensator C3 dem Eingang eines Schmitt-Triggers zugeführt. Für den praktischen Aufbau wurden die Werte der Widerstände R1 und R4 zu 50 Ohm, die der Widerstände R5 und R7 zu 330 Ohm und die des Widerstandes R2 zu 100 Ohm gewählt; der Spannungsteiler R3, R6 wurde abgleichbar ausgeführt. Die Leitung L2 hatte im praktischen Fall einen Wellenwiderstand von 75 Ohm und die Betriebsspannung $-U_b$ betrug $-5{,}3$ V. Dabei wurde für einen einen Stufenabstand des Eingangssignals von 0,5 V und bei einem Schwellenspannungsabstand des verwendeten Schmitt-Triggers von 0,45 V ein Dynamikbereich von $> 26$ dB erreicht; zur Aussteuerung des Schmitt-Triggers genügten dabei 25 mV$_{ss}$.

## Patentansprüche

1. Amplitudenentscheider für digitale Signale mit n Amplitudenstufen mit wenigstens einem Schmitt-Trigger (STRx), dadurch gekennzeichnet, daß $n-1$ mit dem Signaleingang verbundene Signalwandler (Swx) mit $n \geq 2$ vorgesehen sind, die jeweils auf eine der zwischen den n Amplitudenstufen liegenden $n-1$ Entscheiderschwellen abgestimmt sind und daß die Signalwandler $n-1$ parallele binäre Signale erzeugen, daß jeweils eine angepaßte, am Ende kurzgeschlossene Leitung (Lx), deren Länge jeweils eine Impulslaufzeit gleich der halben Schrittperiodendauer ergibt, an jeden Signalausgang der Signalwandler angeschlossen ist, daß die Leitungen $n-1$ parallele pseudoternäre Signale erzeugen und daß $n-1$ gleiche, an die Signalausgänge der Signalwandler angeschlossene Schmitt-Trigger (STRx) vorgesehen sind, die aus den zugeführten pseudoternären Signalen amplitudenentschiedene binäre Signale erzeugen, die entweder direkt oder nach einer Zeitentscheidung zu einem neuen Mehrstufensignal kombiniert werden können.

2. Amplitudenentscheider nach Patentanspruch 1, dadurch gekennzeichnet, daß die Signalwandler jeweils aus einem Differenzverstärker in ECL-Schaltung mit jeweils einem Eingangs- und einem Ausgangstransistor gebildet sind, daß der Basisanschluß des Eingangstransistors mit dem Signaleingang des Signalwandlers und der Basisanschluß des Ausgangstransistors mit einem, der betrachteten Schwelle entsprechenden Vergleichspotential verbunden ist und daß der Kollektoranschluß des Ausgangstransistors über einen Widerstand mit dem einen Anschluß der am Ende kurzgeschlossenen Leitung und mit dem Eingang des Schmitt-Triggers verbunden ist.

3. Amplitudenentscheider nach Patentanspruch 1, dadurch gekennzeichnet, daß die Signalwandler jeweils aus zwei in Reihe geschalteten Differenzverstärkern vom ECL-Typ mit jeweils einem Eingangs- und einem Ausgangstransistor gebildet sind und daß der Basisanschluß des Eingangstransistors des ersten Differenzverstärkers mit dem Signaleingang, der Basisanschluß des Ausgangstransistors des ersten Differenzverstärkers mit einem ersten Vergleichspotential, der Kollektoranschluß dieses Transistors wahlweise über einen Kondensator oder aber direkt mit dem Mittelunkt eines Basisspannungsteilers und mit dem Basisanschluß des Eingangstransistors des zweiten Differenzverstärkers verbunden ist, daß der Basisanschluß des Ausgangstransistors des zweiten Differenzverstärkers mit einem zweiten Vergleichspotential und der Kollektoranschluß dieses Transistors über einen Widerstand mit dem einen Anschluß der am Ende kurzgeschlossenen Leitung und zusätzlich über einen Kondensator mit dem Eingang des Schmitt-Triggers verbunden ist.

## Claims

1. Amplitude decision device for digital signals having n amplitude stages with at least one Schmitt-trigger (STRx), characterised in that there are provided n−1 signal converters (Swx), where n≥2, which are connected to the signal input and which are each set to one of the n−1 decision element thresholds which lie between the n amplitude stages, and that the signal converters produce parallel n−1 binary signals, that a respective tuned line (Lx) which is shortcircuited at the end and whose length results in each case in a pulse transit time corresponding to half of the step period is connected to each signal output of the signal converters, that the lines produce n−1 parallel pseudo-ternary signals and that n−1 identical Schmitt triggers (STRx) which are connected to the signal outputs of the signal converters and which produce amplitude determined binary signals from the supplied pseudo-ternary signals, which binary signals can be combined in a new multistage signal either directly or after a time decision.

2. Amplitude decision device as claimed in Claim 1, characterised in that the signal converters are each formed from a difference amplifier in ECL-circuitry in each case with an input transistor and an output transistor, that the base terminal of the input transistor is connected to the signal input of the signal converter and the base terminal of the output transistor is connected to a comparison potential which corresponds to the considered threshold, and that the collector terminal of the output transistor is connected via a resistor to the one terminal of the short-circuited line and to the input of the Schmitt trigger.

3. Amplitude decision device as claimed in claim 1, characterised in that the signal converters are each formed from two series-connected difference amplifiers of the ECL-type, in each case with an input transistor and an output transistor, and that the base terminal of the input transistor of the first difference amplifier is connected to the signal input, the base terminal of the output transistor is connected to a first comparison potential, the collector terminal of this transistor is connected, either via a capacitor or directly, to the centre point of a base voltage divider and to the base terminal of the input transistor of the second difference amplifier, that the base terminal of the output transistor of the second difference amplifier is connected to a second comparison potential and the collector terminal of this transistor is connected via a resistor to the one terminal of the line which is short-circuited at the end and in addition connected via a capacitor to the input of the Schmitt trigger.

**Revendications**

1. Discriminateur d'amplitude pour des signaux numériques à n étages d'amplitude et à au moins une bascule de Schmitt (STRx), caractérisé par le fait qu'il est prévu n−1 convertisseurs de signaux reliés à l'entrée des signaux avec n≥2, et dont chacun est accordé à un seuil de discrimination n−1 qui se situe entre les n étages d'amplitude et que les convertisseurs de signaux produisent n−1 signaux binaires partiels, qu'un conducteur (Lx) adapté, courtcircuité à l'extrémité et dont la longueur donne une durée de transit des impulsions égale à la durée de la période de la cadence, est relié à chaque sortie de signal des convertisseurs de signaux, que les conducteurs produisent n−1 signaux pseudo-ternaires parallèles et qu'il est. prévu n−1 bascules de Schmitt (STRx) identiques qui produisent, à partir des signaux pseudoternaires appliqués, des signaux binaires descriminés du point de vue de l'amplitude et qui peuvent être, soit directement ou après une discrimination temporelle, combinés en un nouveau signal à paliers multiples.

2. Discriminateur d'amplitude selon la revendication 1, caractérisé par le fait que chaque convertisseur de signaux est constitué par un amplificateur différentiel en montage ECL et à transistor d'entrée et à transistor de sortie, que la borne de raccordement de la base du transistor d'entrée est reliée à l'entrée des signaux du convertisseur de signaux, alors que la borne de raccordement de la base du transistor de sortie est reliée à une tension de référence correspondant au seuil considéré et que la borne de raccordement du collecteur du transistor de sortie est reliée, par l'intermédiaire d'une résistance, avec l'une des bornes de raccordement du conducteur courtcircuité à l'extrémité ainsi qu'à l'entrée de la bascule de Schmitt.

3. Discriminateur d'amplitude selon la revendication 1, caractérisé par le fait que chacun des convertisseurs de signaux est constitué par deux amplificateurs différentiels du type ECL montés en série, dont chacun possède un transistor d'entrée et un transistor de sortie, que la borne de raccordement de la base du transistor d'entrée du premier amplificateur différentiel est reliée à l'entrée des signaux, que la borne de raccordement de la base du transistor de sortie du premier amplificateur différentiel est reliée une première tension de référence, que la borne de raccordement du collecteur de ce transistor est reliée, au choix, par l'intermédiaire d'un condensateur ou directement au point médian d'un diviseur de tension de base et à la borne de raccordement de la base du transistor d'entrée du second amplificateur différentiel, et que la borne de raccordement de la base du transistor de sortie du second amplificateur différentiel est reliée une seconde tension de référence, alors que la borne de raccordement du collecteurs de ce transistor est reliée l'intermédiaire d'une résistance à ladite borne de raccordement du conducteur courtcircuité à l'extrémité et, de plus, et par l'intermédiaire d'un condensateur, à l'entrée de la bascule de Schmitt.

**FIG 1**

**FIG 2**

**FIG 5**

7

# FIG 3

# FIG 4